(19) **Europäisches Patentamt / European Patent Office / Office européen des brevets**

(11) **EP 1 326 151 B1**

(12) **EUROPÄISCHE PATENTSCHRIFT**

(45) Veröffentlichungstag und Bekanntmachung des Hinweises auf die Patenterteilung:
**16.04.2008  Patentblatt 2008/16**

(51) Int Cl.:
***G05B 19/4103*** *(2006.01)*

(21) Anmeldenummer: **02027426.2**

(22) Anmeldetag: **09.12.2002**

(54) **Polynom- und Spline-Interpolation von Werkzeugorientierungen**

Polynome and spline interpolation for tool orientation

Interpolation par polynôme et spline pour l'orientation de l'outil

(84) Benannte Vertragsstaaten:
**DE FR GB**

(30) Priorität: **21.12.2001  DE 10163503**

(43) Veröffentlichungstag der Anmeldung:
**09.07.2003  Patentblatt 2003/28**

(73) Patentinhaber: **SIEMENS AKTIENGESELLSCHAFT
80333 München (DE)**

(72) Erfinder: **Munz, Martin, Dr.
71229 Leonberg (DE)**

(56) Entgegenhaltungen:
**EP-A- 0 268 491      EP-A- 0 507 949
US-A- 5 438 522**

- **FLEISIG R V ET AL: "A constant feed and reduced angular acceleration interpolation algorithm for multi-axis machining" COMPUTER AIDED DESIGN, ELSEVIER PUBLISHERS BV., BARKING, GB, Bd. 33, Nr. 1, Januar 2001 (2001-01), Seiten 1-15, XP004227221 ISSN: 0010-4485**

**Beschreibung**

Die Erfindung betrifft ein Verfahren und eine korrespondierende numerische Steuerung zur Bewegungsführung eines bewegbaren Maschinenelementes einer numerisch gesteuerten industriellen Bearbeitungsmaschine wie einer Werkzeugmaschine, einem Robotern oder dergleichen.

Bei industriellen Bearbeitungsmaschinen wie z.B. Werkzeugmaschinen, die über die kinematische Möglichkeit verfügen, das Werkzeug im Raum zu orientieren, wird in der Regel die Orientierung des Werkzeugs in jedem Satz programmiert. Dabei gibt es verschiedene Möglichkeiten: zum einen kann die Werkzeugorientierung direkt durch die Angabe der Rundachsstellungen programmiert werden. Eine wesentlich elegantere Methode besteht jedoch darin die Orientierung des Werkzeugs im Raum mittels Orientierungsvektoren zu programmieren.

Im Normalfall wird nun bei jedem NC-Satz eine Orientierung programmiert, die am Ende des Satzes erreicht werden soll. Die Änderung der Orientierung vom Startvektor zum Endvektor erfolgt im Normalfall durch eine Großkreisinterpolation (GKI), d.h. der Orientierungsvektor wird in der Ebene, die vom Start- und Endvektor aufgespannt wird, geschwenkt. Dabei wird der Winkel zum Startvektor linear interpoliert.

Werden nun Orientierungen gemäß der Großkreisinterpolation über mehrere aufeinanderfolgenden Sätzen hinweg interpoliert, so erhält man in der Regel abrupte Änderungen des Orientierungsvektors an den Satzübergängen. Dies führt zu nichtstetigen Geschwindigkeits- und Beschleunigungsänderungen der Rundachsen an den Satzübergängen. Das heißt jedoch, dass mittels der Großkreisinterpolation keine geschwindigkeits- und beschleunigungsstetige Bewegung der Orientierungsachsen über mehrere Sätze hinweg generiert werden kann.

Dies entspricht der Situation wie sie bei normalen Linearachsen vorliegt, wenn nur G1-Sätze interpoliert werden. Bei Linearachsen erreicht man eine beschleunigungsstetige Bewegung indem Polynome zur Interpolation der Achsen verwendet werden.

Ein Verfahren wie es bei Linearachsen angewandt wird, kann jedoch aus technischen Gründen nicht ohne weiteres auf Orientierungen übertragen werden, sondern es sind dabei die speziellen Eigenschaften der Orientierungsvektoren zu berücksichtigen.

In der EP-A-0 268 491 wird ein Verfahren und eine numerische Steuerung offenbart, die das "4-Winkel" Verfahren zur Interpolation des Orientierungsvektors benutzen.

Bei "normaler" Achsinterpolation gibt es außerdem die Möglichkeit, außer der Programmierung von Linearsätzen und Kreisen auch direkt Polynome für die Achsbewegungen zu programmieren. Dies ermöglicht die Programmierung von komplexen Geometrien. Für die Interpolation von Orientierungsvektoren ist eine solche Möglichkeit jedoch nicht bekannt.

Aufgabe der vorliegenden Erfindung ist es daher, ein Steuerungsverfahren zu schaffen, mit dem auch Polynome für die Änderung von Orientierungsvektoren programmierbar sind. Eine weitere Aufgabe besteht darin, eine geschwindigkeits- und beschleunigungsstetige Bewegung der Orientierungsachsen über mehrere Sätze hinweg zu ermöglichen.

Gemäß der vorliegenden Erfindung wird dies durch ein Steuerungsverfahren zur Bewegungsführung eines bewegbaren Maschinenelementes einer numerisch gesteuerten industriellen Bearbeitungsmaschine erreicht, indem

- das Maschinenelement im Arbeitsraum mittels Orientierungsvektoren im Raum orientierbar ist und
- eine Bewegungsbahn des Maschinenelementes sowie dessen Orientierung in unmittelbar aufeinanderfolgende Bewegungsabschnitte aufgelöst ist, wobei
- eine Änderung der Orientierung innerhalb eines Bewegungsabschnitts durch Schwenken eines Orientierungsvektors von einem Startvektor zu einem Endvektor um einen ersten Win-kel in der von Startvektor und Endvektor aufgespannten Ebene und um einen zweiten Winkel senkrecht zu dieser Ebene erfolgt, wobei
- beide Winkel von Orientierungsvektoren über mehrere Bewegungsabschnitte interpoliert werden.

Damit kann in jedem Satz ein Orientierungsvektor programmiert werden, der dann mittels Großkreisinterpolation erreicht wird (d.h. Linearinterpolation des Winkels in der Ebene, die vom Start- und Endvektor aufgespannt wird). Durch die Möglichkeit der Programmierung von Polynomen auch in diesem Fall, kann dann der "Weg", wie dieser Endvektor erreicht werden soll, nahezu beliebig festgelegt werden. Im allgemeinen Fall liegt dann der interpolierte Orientierungsvektor nicht mehr in der Ebene zwischen Start- und Endvektor, sondern kann beliebig aus dieser Ebene gedreht werden.

Vorteilhaft erfolgt eine Interpolation der beiden Winkel von Orientierungsvektoren über mehrere Bewegungsabschnitte somit durch eine Polynominterpolation. Der konstante und der lineare Koeffizient eines Polynoms zur Polynominterpolation können dabei durch den Anfangswert oder Endwert eines Orientierungsvektors festgelegt werden.

Eine Interpolation der Winkel von Orientierungsvektoren über mehrere Bewegungsabschnitte kann außerdem auch durch eine Splineinterpolation erfolgen.

Besonders vorteilhaft lässt sich das Verfahren anwenden, wenn das bewegliche Maschinenelement ein Werkzeug der Bearbeitungsmaschine ist, wobei der Orientierungsvektor eine Raumkurve der Werkzeugspitze beschreibt.

Bei der voranstehend beschriebenen Großkreisinterpolation wird die Werkzeugorientierung in einer Ebene, die von der Start- und der Endorientierung aufgespannt wird, interpoliert. Werden erfindungsgemäß zusätzlich Polynome programmiert, so kann der Orientierungsvektor auch aus dieser Ebene gekippt werden. Es ist jedoch auch damit nur näherungsweise möglich, die Interpolation des Orientierungsvektors auf einer Kegelmantelfläche zu beschreiben.

Solche Orientierungsänderungen können nicht in einem Satz interpoliert werden, es muss herkömmlich je nach geforderter Genauigkeit eine Satzunterteilung vorgenommen werden. Man erhält dann aufeinanderfolgende im allgemeinen kurze Sätze, in den die Orientierungsänderung mittels Großkreisinterpolation interpoliert wird. Zusätzlich können diese Orientierungsänderungen verschliffen werden, so dass zumindest insgesamt ein glatter Orientierungsverlauf erreicht werden kann. Aber man erreicht dabei nicht, dass die geforderte Orientierungsänderung, wie es z.B. in dem Fall auftritt wenn eine kreisförmige Kontur mit konstanter Anstellung des Werkzeugs bearbeitet werden soll, exakt beschrieben wird.

Dabei erfolgt eine Interpolation von Orientierungsvektoren über mehrere Bewegungsabschnitte analog zu einer Interpolation von Kreisen in einer Ebene.

Mit der so erfindungsgemäß erweiterten Interpolation von Orientierungen können Orientierungsänderungen auf einer beliebig im Raum liegenden Kegelmantelfläche beschrieben werden.

Dazu wird vorteilhaft als erster Winkel jeweils der Drehwinkel der Orientierung um die Richtungsachse des Kegels und als zweiter Winkel jeweils der Öffnungswinkel des Kegels vorgegeben.

Aufbauend auf den beschriebenen Maßnahmen der Erfindung können die Koeffizienten von Polynomen oder Splines zur Interpolation einer Orientierung des Maschinenelementes so gewählt werden, dass eine geschwindigkeitsstetige und/oder beschleunigungsstetige Bewegung der Orientierungsachsen des Maschinenelementes erfolgt.

Als Vorrichtung zur Durchführung des Verfahrens der Erfindung eignet sich insbesondere eine geeignet programmierte numerische Steuerung.

Weitere Vorteile und Details ergeben sich anhand der im Folgenden beschriebenen Ausführungsbeispiele und in Verbindung mit den Figuren. Es zeigen in Prinzipdarstellung:

FIG 1     eine Skizze zur Darstellung der Drehung eines Orientierungsvektors in der Ebene zwischen Start- und Endvektor und

FIG 2     eine erfindungsgemäße Bewegung der Orientierungsvektors in der Draufsicht.

Wie bereits eingangs erwähnt wurde, gibt es bei herkömmlichen Achsinterpolationen die Möglichkeit, außer der Programmierung von Linearsätzen und Kreisen auch direkt Polynome für die Achsbewegungen zu programmieren. Dies ermöglicht die Programmierung von komplexen Geometrien. Für die Interpolation von Orientierungsvektoren wird eine solche Möglichkeit durch die vorliegende Erfindung geschaffen.

Somit kann in jedem Satz ein Orientierungsvektor programmiert werden, der dann nicht nur mittels Großkreisinterpolation erreicht wird (d.h. Linearinterpolation des Winkels in der Ebene, die vom Start- und Endvektor aufgespannt wird). Durch die Möglichkeit der Programmierung von Polynomen gemäß der Erfindung auch in diesem Fall, kann dann der Weg zu einem Endvektor nahezu beliebig festgelegt werden. Im allgemeinen Fall liegt dann der interpolierte Orientierungsvektor nicht mehr in der Ebene zwischen Start- und Endvektor, sondern kann beliebig aus dieser Ebene gedreht werden.

Mit den oben beschriebenen Möglichkeiten zur Programmierung der Werkzeugorientierung können NC-Programme erstellt werden, die unverändert auf Maschinen mit unterschiedlichen Kinematiken abgearbeitet werden können (Standard 5-Achs Maschinen mit unterschiedlichen Anordnungen der Orientierungsachsen als auch Parallelkinematik Maschinen, wie z.B. Hexapoden, usw.). Dabei gibt es zur Programmierung der Werkzeugorientierung insgesamt die gleichen Möglichkeiten wie zur Programmierung der Werkzeugbahnen. Mit den vorgestellten Interpolationsarten wie Polynome und Kegelmantel für die Orientierung können somit Bearbeitungsprogramme erstellt werden, bei denen alle beteiligten Maschinenachsen einen stetigen Verlauf der Beschleunigung aufweisen.

In den nachfolgenden Ausführungsbeispielen werden die möglichen Arten der Programmierung der Werkzeugorientierung illustriert. In diesen Beispielen sind jeweils nur Orientierungsänderungen programmiert, bei konkreten Anwendungen wäre hier noch die Bewegung des Werkzeugs anzugeben. Weiterhin sind die verwendeten Bezeichner zur Programmierung nur als Beispiel anzusehen. Diese können durch beliebige andere Bezeichner ersetzt werden.

Die Programmierung der Orientierungsvektoren gemäß der Erfindung kann auf unterschiedliche Weise erfolgen:

1. Programmierung der Rundachspositionen mit A, B und C bzw. mit den tatsächlichen Rundachsbezeichnern.
2. Programmierung in Eulerwinkel oder RPY-Winkel über A2, B2, C2
3. Programmierung des Richtungsvektors über A3, B3, C3.
4. Programmierung über Voreilwinkel LEAD und Seitwärtswinkel TILT.

Die Art der Interpolation der Orientierung wird mittels der folgenden Programmbefehlen ausgewählt:

ORIAXES: Interpolation der Maschinenachsen
ORIVECT: Interpolation des Orientierungsvektors

Bei der 1. Interpolationsart hängt hierbei die Änderung der Orientierung von der jeweiligen Maschinenkinematik ab. Nur wenn wie im 2. Fall direkt der Orientierungsvektor interpoliert wird, erhält man eine kinematikunabhängige Orientierungsänderung.

Die unterschiedlichen Interpolationsarten werden z.B. durch einen modal gültigen Programmbefehl ausgewählt:

ORIPLANE = orientation interpolation in a plane - Interpolation in einer Ebene (Großkreisinterpolation)

ORICONCW = orientation interpolation on a cone clockwise - Interpolation auf einer Kegelfläche im Uhrzeigersinn

ORICONCCW = orientation interpolation on a cone counter clockwise -
Interpolation auf einer Kegelfläche gegen den Uhrzeigersinn

ORICONIO = orientation interpolation on cone with intermediate orientation -
Interpolation auf einer Kegelfläche mit Angabe einer Zwischenorientierung

ORICONTO = orientation interpolation on a cone with tangential orientation -
Interpolation auf einer Kegelfläche mit tangentialem Übergang

Dabei sind abhängig vom jeweiligen Programmbefehl weitere Angaben notwendig. Generell gilt, dass die Startorientierung durch den vorhergehenden Satz festgelegt ist. Die Endorientierung wird entweder durch die Angabe des Vektors (mit A3, B3, C3), der Euler- bzw. RPY-Winkel (mit A2, B2, C2) oder durch Programmierung der Rundachspositionen (mit A, B, C) festgelegt.

Die Programmierung der Winkelpolynome erfolgt mit:

```
PO[PHI] = (a2, a3, a4, a5)
```

```
PO[PSI] = (c2, c3, c4, c5)
```

Das heißt die konstanten und linearen Koeffizienten der Winkelpolynome können nicht programmiert werden. Diese Koeffizienten werden durch die Start- und Endorientierung bestimmt.

In den nachfolgenden Beispielen wird davon ausgegangen dass die anfängliche Orientierung in z-Richtung zeigt (A3=0, B3=0, C3=1).

1. Interpolation in einer Ebene (Großkreisinterpolation)
A3=1 B3=0 C3=0
Die Orientierung wird hierbei in der xz-Ebene um 90 Grad gedreht.
2. Polynom Interpolation
A3=1 B3=0 C3=0
PO[PHI]=(a2,a3,a4,a5) PO[PSI]=(b2,b3,b4,b5)
Die Endorientierung zeigt in x-Richtung. Die Interpolation erfolgt gemäß den Winkelpolynome für PHI und PSI und kann beliebig aus der xz-Ebene auskippen.
3. Kegelinterpolation entgegen dem Uhrzeigersinn
A3=1 B3=0 C3=1
ORICONCCW A3=0 B3=1 C3=1 A6=0 B6=0 C6=1
Zuerst dreht sich die Orientierung um 45 Grad in der xz-Ebene, danach wird sie um 90 Grad auf einem Kegel in z-Richtung (A6=0, B6=0, C6=1) entgegen dem Uhrzeigersinn bewegt.
4. Kegelinterpolation im Uhrzeigersinn
A3=1 B3=0 C3=1
ORICONCW A3=0 B3=1 C3=1 A6=0 B6=0 C6=1
Die Orientierung bewegt sich um 270 Grad im Uhrzeigersinn auf einem Kegel in z-Richtung.
5. Interpolation eines vollständigen Kegels

A3=1 B3=0 C3=1
ORICONCW A6=0 B6=0 C6=1
Die Orientierung bewegt sich um 360 Grad im Uhrzeigersinn auf einem Kegel in z-Richtung.
6. Kegelinterpolation mit Angabe des Öffnungswinkel
A3=1 B3=0 C3=1
ORICONCW A3=0 B3=1 C3=1 NUT=45
Die Orientierung bewegt sich um 270 Grad auf einem Kegel mit einem Öffnungswinkel von 45 Grad.
7. Kegelinterpolation mit Angabe einer Zwischenorientierung
A3=1 B3=0 C3=1
ORICONIO A3=-1 B3=0 C3=1 A7=0 B7=1 C7=1
Die Orientierung bewegt sich um 180 Grad auf einem Kegel in z-Richtung, der durch die Zwischenorientierung (A7=0, B7=1, C7=1) bestimmt wird.

Eine mögliche softwaretechnische Implementierung der Erfindung in einer numerischen Steuerung in der Programmiersprache C++ kann z.B. wie folgt aussehen.

Die Änderung der Orientierungvektoren wird vollständig durch eine Klasse Ocurve beschrieben. Diese liefert über eine Methode orientation(s) dem Interpolator die aktuellen Werte des Orientierungsvektors bzw. dessen Ableitungen zum Bahnparameter s, die zum Verfahren der Orientierungsachsen notwendig sind.

Die Klasse Ocurve beinhaltet die Daten und Methoden, die zur Beschreibung der Interpolation von einem Startvektor zu einem Endvektor hin notwendig sind. Diese Klasse beinhaltet u.a. die folgenden Daten und Methoden:

Polynom phi; Drehwinkel in der Ebene die von Start- und Endvektor aufgespannt wird.

Polynom psi; Winkel des Orientierungsvektors zu dieser Ebene.

Vector verticalVector; (konstanter) Vektor, der senkrecht zum Startvektor und Endvektor steht.

double length() liefert eine numerische Berechnung der "Länge" der Ocurve.

Vector orientation(s) liefert den aktuellen Orientierungsvektor zum Bahnparameter s.

Vector tangent(s) liefert den normierten Ableitungsvektor der Orientierung zum Bahnparameter s.

Vector unnormTangent(s) liefert den unnormierten Ableitungsvektor der Orientierung zum Bahnparameter s.

Zur Initialisierung einer allgemeinen Interpolation von Orientierungsvektoren wird der Konstruktor

Ocurve::Ocurve(const Vector& start, const Vector& end, const Polynom& phiP, const Polynom& psiP)

benutzt. Dabei werden mit start und end die Start- und Endvektoren und mit phiP bzw. psiP können für die Winkel phi und psi (beliebige) Polynome angegeben werden.

Weitere Konstruktoren dienen zur Initialisierung der Interpolation der Orientierung auf einer Kegelfläche mit der Vorgabe von Start- und Endorientierung und Richtungsvektor, Öffnungswinkel oder Zwischenorientierung.

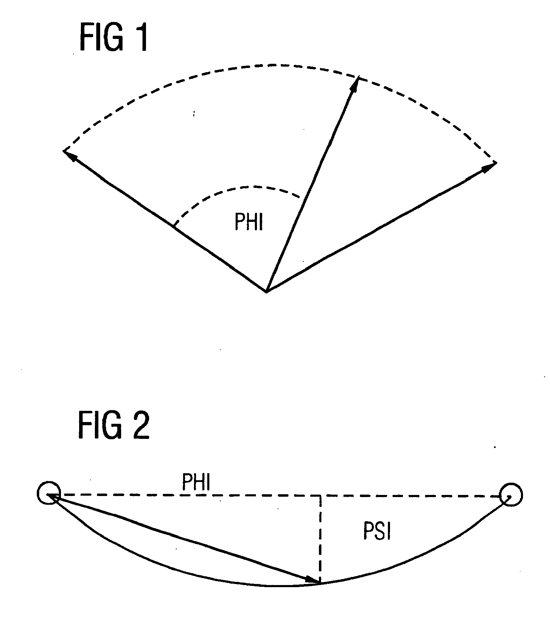

Die Darstellung nach FIG 1 zeigt die Drehung eines Orientierungsvektors in der Ebene zwischen Start- und Endvektor um einen Winkel PHI gemäß einer sog. Großkreisinterpolation). Mit Hilfe des weiteren Winkels PSI können Bewegungen des Orientierungsvektors senkrecht zu dieser Ebene erzeugt werden. Dieser Zusammenhang ist in der Darstellung gemäß der FIG 2 in Form einer Draufsicht gezeigt.

Für diese Winkel empfiehlt es sich in der Praxis, dass maximal quintische Polynome programmiert werden. Dabei wird jeweils der konstante und lineare Koeffizient durch den Anfangswert bzw. Endwert des Orientierungsvektors festgelegt. In der Liste der Koeffizienten können Koeffizienten höherer Ordnung weggelassen werden, falls diese alle gleich Null sind. Mit PL kann zusätzlich die Länge des Parameterintervalls programmiert werden, auf dem die Polynome definiert sind. Beide Winkel PHI und PSI werden z.B. in Grad angegeben.

Dazu lassen sich entsprechende Funktionen in einer numerischen Steuerung mit der oben beschriebenen Funktionalität bereitstellen, z.B. mit

POLY

Einschalten der Polynominterpolation für alle Achsgruppen.
POLYPATH()
Einschalten der Polynominterpolation für selektive Achsgruppen, mögliche Gruppen sind "AXES" und "VECT".

$$\texttt{PO[PHI]} = \texttt{(a2, a3, a4, a5)}$$

Der Winkel PHI wird gemäß PHI(u) = a0 + a1*u + a2*u2 + a3*u3 + a4*u4 + a5*u5 interpoliert. Die Koeffizienten werden in Grad an gegeben.

$$\texttt{PO[PSI]} = \texttt{(b2, b3, b4, b5)}$$

Der Winkel PSI wird gemäß PSI(u) = b0 + b1*u + b2*u2 + b3*u3 + b4*u4 + b5*u5 interpoliert. Die Koeffizienten werden in Grad an gegeben.

PL

Länge des Parameterintervalls auf dem die Polynome definiert sind. Das Intervall beginnt immer bei 0. Theoretischer Wertebereich für PL: 0,0001 ... 99999,9999. Der PL-Wert gilt für den Satz, in dem er steht. Ist kein PL programmiert, wirkt PL = 1.

Wird für den Winkel PSI kein Polynom programmiert, so verläuft die Interpolation des Orientierungsvektors immer in der Ebene, die vom Start- und Endvektor aufgespannt wird. Der Winkel PHI in dieser Ebene wird gemäß dem programmierten Polynom für PHI interpoliert. Damit ist es unter anderem möglich zu erreichen, dass der Orientierungsvektor zwar durch eine "normale" Großkreisinterpolation in der Ebene zwischen Start- und Endvektor bewegt wird, dabei aber abhängig von dem programmierten Polynom eine mehr oder weniger ungleichförmige Bewegung macht. Dadurch kann also der Geschwindigkeits- und Beschleunigungsverlauf der Orientierungsachsen innerhalb eines Satzes beeinflusst werden.

Im Folgenden findet sich eine Darstellung der mathematischen Grundlagen zur Polynominterpolation von Orientierungen gemäß der vorliegenden Erfindung:

Es soll eine möglichst allgemeine Interpolation eines Orientierungsvektors durchgeführt werden, die zwischen zwei vorgegebenen Vektoren, dem Start- und Endvektor, interpoliert. Dazu betrachtet man einen allgemeinen Vektor, der zwischen Start- und Endvektor interpoliert, und zerlegt ihn in Komponenten:

$$\mathbf{o} = \sin\psi\,\mathbf{v} + \cos\psi\,\mathbf{w}$$

wobei der auf Länge 1 normierte Vektor **v** senkrecht zum Startvektor **s** und zum Endvektor **e** steht:

$$\mathbf{v} = \frac{\mathbf{s} \times \mathbf{e}}{|\mathbf{s} \times \mathbf{e}|}$$

Im folgenden wird angenommen, dass die vorgegebenen Start- und Endvektoren **s** und **e** auf Länge 1 normiert sind. Der Vektor **w** liegt in der Ebene, die von den Vektoren **s** und **e** aufgespannt wird, und ist dementsprechend orthogonal zum Vektor **v,** d.h. es gilt:

$$\mathbf{v} \cdot \mathbf{w} = 0$$

Der Vektor **w** ist nicht konstant, sondern wird in der Ebene senkrecht zu **v** geschwenkt. Mit dem Winkel $\phi$

zwischen dem Vektor **w** und dem Startvektor **s** erhalten wir die Zerlegung:

$$\mathbf{w} = \cos\phi\, \mathbf{s} + \sin\phi\, \mathbf{n}$$

wobei der normierte Vektor:

$$\mathbf{n} = \frac{\mathbf{v} \times \mathbf{s}}{|\mathbf{v} \times \mathbf{s}|}$$

senkrecht zu den Vektoren **s** und **v** ist:

$$\mathbf{s} \cdot \mathbf{n} = \mathbf{v} \cdot \mathbf{n} = 0$$

Das heißt die Vektoren **s, v** und **n** bilden ein orthogonales Dreibein. Insgesamt resultiert also die Darstellung eines beliebigen Orientierungsvektors in der Form:

$$\mathbf{o}(\phi,\psi) = \sin\psi\, \mathbf{v} + \cos\psi(\cos\phi\, \mathbf{s} + \sin\phi\, \mathbf{n})$$

Daraus erhält man

$$\mathbf{o} \cdot \mathbf{o} = 1\,.$$

Das heißt die Normierung des Vektors **o(**$\psi$**,**$\phi$**)** bleibt für beliebige Winkel $\phi$ und $\psi$ erhalten. Dies bedeutet bei einer beliebigen Orientierungsänderung beschreibt die Spitze des Orientierungsvektors eine beliebige Kurve auf der Einheitskugel.
In dieser allgemeinen Darstellung eines Orientierungsvektors können die Winkel $\phi$ und $\psi$ beliebige Funktionen des Bahnparameters **u** sein.
Der Sonderfall der Großkreisinterpolation (GKI) bei der die Orientierungsänderung nur in der Ebene zwischen Start- und Endvektor abläuft, erhalten wir daraus für $\psi$ **= 0 :**

$$\mathbf{o}(\phi) = \cos\phi\, \mathbf{s} + \sin\phi\, \mathbf{n}$$

Die allgemeine Darstellung des Orientierungsvektors lässt sich auch als zwei überlagerte Großkreisinterpolationen interpretieren. Die erste GKI als eine Drehung um den Winkel $\phi$, ausgehend vom Startvektor **s,** in der Ebene zwischen Start- und Endvektor, resultierend in dem Vektor **w,** und die zweite GKI als eine darauffolgende Drehung um den Winkel $\psi$, ausgehend vom Vektor **w,** in der Ebene, die von den Vektoren **w** und **v** aufgespannt wird, und senkrecht zur ersten Drehebene steht.
Bei der allgemeinen Darstellung eines Orientierungsvektors können die beiden Winkelfunktionen beliebige Funktionen $\phi$**(u)** und $\psi$**(u)** des Interpolationsparameters **u** sein. Es lassen sich daraus in allgemeiner Form die zur Interpolation der Orientierung notwendigen Ableitungen berechnen. Weiterhin kann ebenso die totale Orientierungsänderung aus den beiden Winkelfunktionen berechnen. Man erhält für die gesamte Orientierungsänderung:

$$\Delta = \int_0^1 du \left| \frac{\partial \mathbf{o}(\phi(u), \psi(u))}{\partial u} \right|$$

mit der Annahme, dass der Interpolationsparameter $u$ auf das Intervall $0 \leq u \leq 1$ normiert ist. Mit der allgemeinen Darstellung eines Orientierungsvektors erhält man daraus:

$$\Delta = \int_0^1 du \left[ \left( \frac{d\psi(u)}{du} \right)^2 + \cos^2 \psi \left( \frac{d\phi(u)}{du} \right)^2 \right]^{1/2}$$

Dieses Integral kann im allgemeinen Fall nur durch numerische Verfahren berechnet werden. Im Spezialfall der Großkreisinterpolation erhalten wir daraus mit $\psi = 0$ :

$$\Delta = \int_0^1 du \left| \frac{d\phi(u)}{du} \right| = \phi(1) - \phi(0)$$

Daraus kann man erkennen, dass die "kürzeste" Kurve zwischen Start- und Endorientierung durch die Großkreisinterpolation beschrieben wird. Alle anderen Orientierungsänderungen haben immer eine größere Länge.

Zur Berechnung der Winkel $\phi$ und $\psi$ eines vorgegebenen Orientierungsvektors $\mathbf{o}$ ist es notwendig die allgemeine Darstellung einer Orientierung nach den Winkeln $\phi$ und $\psi$ aufzulösen. Man erhält durch skalare Multiplikation mit $\mathbf{v}$ :

$$\psi = \mathrm{asin}(\, \mathbf{o} \cdot \mathbf{v})$$

und durch Multiplikation mit $\mathbf{s}$ :

$$\phi = \mathrm{acos}\left( \frac{\mathbf{o} \cdot \mathbf{s}}{\sqrt{1 - (\mathbf{o} \cdot \mathbf{v})^2}} \right)$$

Damit lassen sich also die Winkel $\phi$ und $\psi$ zu jedem beliebigen Vektor $\mathbf{o}$ berechnen, der nicht parallel zu $\mathbf{v}$ ist.

Insbesondere können damit die Start- und Endwinkel bestimmt werden, so dass die Randbedingungen

$$\mathbf{o}(\phi = 0, \psi = 0) = \mathbf{s}$$

$$\mathbf{o}(\phi = \phi_e, \psi = \psi_e) = \mathbf{e}$$

Daraus erhält man schließlich

$$\phi_e = \operatorname{acos}(\mathbf{s} \cdot \mathbf{e})$$

$$\psi_e = n\pi$$

mit $n = 0,1,2,...$ Diese Mehrdeutigkeit in der Festlegung des Endwinkels $\psi_e$ ist ein Ausdruck dafür, dass derselbe Endvektor auf verschiedene Wegen erreicht werden kann. Die einfachste Möglichkeit ($n = 0$) ist die, dass der Orientierungsvektor mittels GKI in der Ebene zwischen Start- und Endvektor geschwenkt wird. Weitere Möglichkeiten sind, dass der Orientierungsvektor senkrecht zu dieser Ebene oszilliert. Prinzipiell gibt es auch Mehrdeutigkeiten bei der Festlegung von $\phi_e$, diese beschreiben jedoch mehrfache vollständige Umdrehungen des Orientierungsvektors um die Einheitskugel, welche wir jedoch nicht näher betrachten wollen.

Bei den seitherigen Betrachtungen können die Winkel $\phi$ und $\psi$ beliebige Funktionen des Bahnparameters $u$ sein. Im Folgenden beschränkt man sich jedoch darauf, dass diese Winkelfunktionen Polynome des Bahnparameters $u$ sind.

Es wird nun die Annahme gemacht, dass die beiden Winkel durch Polynome dargestellt werden können:

$$\phi(u) = \sum_{i=0}^{i=N} a_i u^i$$

$$\psi(u) = \sum_{i=0}^{i=N} b_i u^i$$

Durch die Forderung, dass für $u=0$ der Startvektor und für $u=1$ der Endvektor erreicht werden soll, erhält man folgende Bedingungen für die Polynomkoeffzienten:

$$\mathbf{o}(u = 0) = \mathbf{s} \quad \Rightarrow \quad \phi(u = 0) = \psi(u = 0) = 0 \quad \Rightarrow \quad a_0 = b_0 = 0$$

und

$$\mathbf{o}(u = 1) = \mathbf{e} \quad \Rightarrow \quad \phi(u = 1) = \phi_e; \quad \psi(u = 1) = 0$$

Daraus erhält man folgende Bedingungen für die linearen Polynomkoeffizienten:

$$a_1 = \phi_e - \sum_{i=2}^{i=N} a_i$$

$$b_1 = -\sum_{i=2}^{i=N} b_i$$

Im Sonderfall von linearen Polynomen, d.h.

$a_i = b_i = 0$ für $i = 2,3,4,...$ erhält man eine Großkreisinterpolation:

$$\phi(u) = \phi_e u$$

$$\psi(u) = 0$$

Betrachtet man nun zwei aufeinanderfolgende Bewegungsabschnitte (NC-Sätze), deren Winkelfunktionen mit $\phi_1, \psi_1$ und $\phi_2, \psi_2$ bezeichnet werden, so erhält man aus den Bedingungen, dass die Orientierungsänderung zwischen den beiden Bewegungsabschnitten C2-stetig verlaufen soll

$$\frac{d\mathbf{o}_1(\phi_{1e}, \psi_{1e})}{du} = \frac{d\mathbf{o}_2(\phi_2 = 0, \psi_2 = 0)}{du}$$

$$\frac{d^2\mathbf{o}_1(\phi_{1e}, \psi_{1e})}{du^2} = \frac{d^2\mathbf{o}_2(\phi_2 = 0, \psi_2 = 0)}{du^2}$$

Bedingungen für die Koeffizienten der Winkelpolynome. Dies betrachten wir nun für das Beispiel von zwei aufeinanderfolgenden Orientierungsänderungen:

$$\mathbf{s}_1 = (0,0,1) \quad \Rightarrow \quad \mathbf{e}_1 = (1,0,0)$$

$$\mathbf{s}_2 = (0,0,1) \quad \Rightarrow \quad \mathbf{e}_2 = (0,1,0)$$

Werden diese Orientierungsänderungen so interpoliert, so ändert sich die Orientierung am Übergang der beiden Abschnitte abrupt, dies führt zu einem Sprung der Geschwindigkeiten und Beschleunigungen der beteiligten Orientierungsachsen. Durch Programmierung geeigneter Polynome für die beiden Winkel $\phi$ und $\psi$ ist es möglich diese Orientierungsänderung beschleunigungsstetig zu interpolieren. Diese Polynome werden durch die Bedingung festgelegt, dass der Orientierungsvektor und dessen 1. und 2. Ableitungen am Satzübergang stetig verlaufen. Aus den allgemeinen Stetigkeitsbedingungen erhält man für dieses Beispiel:

$$\frac{d\phi_2}{du} = \frac{d\psi_1}{du}$$

$$\frac{d\psi_2}{du} = -\frac{d\phi_1}{du}$$

$$\frac{d^2\phi_2}{du^2} = \frac{d^2\psi_1}{du^2}$$

$$\frac{d^2\psi_2}{du^2} = -\frac{d^2\phi_1}{du^2}$$

Für die beiden Winkelpolynome macht man nun den Ansatz:

$$\phi_{1,2}(u) = a_{1,2}^0 + a_{1,2}^1 u + a_{1,2}^2 u^2$$

$$\psi_{1,2}(u) = b_{1,2}^0 + b_{1,2}^1 u + b_{1,2}^2 u^2$$

Die Koeffizienten dieser Polynome lassen sich aus obigen Stetigkeitsbedingungen berechnen, und wir erhalten schließlich die Winkelpolynome:

$$\phi_1(u) = \frac{3}{4}\pi u - \frac{1}{4}\pi u^2$$

$$\psi_1(u) = -\frac{1}{4}\pi u + \frac{1}{4}\pi u^2$$

$$\phi_2(u) = \frac{1}{4}\pi u + \frac{1}{4}\pi u^2$$

$$\psi_2(u) = -\frac{1}{4}\pi u + \frac{1}{4}\pi u^2$$

Zur Programmierung von Orientierungen des Werkzeugs, die unabhängig von der speziellen Kinematik der Maschine ist, gibt es - wie oben dargestellt - die Möglichkeit der Großkreisinterpolation. Dabei wird der Orientierungsvektor in der Ebene, die von Start- und Endorientierung aufgespannt wird, gedreht. Dies erfolgt durch (normalerweise) lineare Interpolation des Winkels, die der Orientierungsvektor mit der Startorientierung bildet.

Mit der dieser bekannten Interpolationsart zugrundeliegenden Darstellung des Orientierungsvektors ist es nun sehr schwierig eine Interpolation des Orientierungsvektors zu beschreiben, bei der die Orientierung sich entlang einer Kegelmantelfläche ändert. Dabei bewegt sich die Spitze des Orientierungsvektors auf einer kreisförmigen Bahn.

Im folgenden wird eine erweiterte Interpolation des Orientierungsvektors gemäß der Erfindung beschrieben, die auf natürliche Weise auch solche Orientierungsänderungen erlauben.

Bei der Großkreisinterpolation wird die Werkzeugorientierung in einer Ebene, die von der Start- und der Endorientierung aufgespannt wird, interpoliert. Werden gemäß der Erfindung zusätzlich Polynome programmiert, kann der Orientierungsvektor auch aus dieser Ebene gekippt werden. Es ist jedoch auch damit nur näherungsweise möglich, die Interpolation des Orientierungsvektors auf einer Kegelmantelfläche zu beschreiben.

Solche Orientierungsänderungen können herkömmlich nicht in einem Satz interpoliert werden, es muss je nach geforderter Genauigkeit eine Satzunterteilung vorgenommen werden. Man erhält dann aufeinanderfolgende im allgemeinen kurze Sätze in den die Orientierungsänderung mittels Großkreisinterpolation interpoliert wird. Zusätzlich können diese Orientierungsänderungen verschliffen werden, so dass zumindest insgesamt ein glatter Orientierungsverlauf erreicht werden kann. Aber man erreicht dabei nicht, dass die geforderte Orientierungsänderung, wie es z.B. in dem Fall auftritt, wenn eine kreisförmige Kontur mit konstanter Anstellung des Werkzeugs bearbeitet werden soll, exakt beschrieben wird.

Mit einer geeignet erweiterten Interpolation von Orientierungen, können Orientierungsänderungen auf einer beliebig im Raum liegenden Kegelmantelfläche beschrieben werden. Dabei muss der Vektor bekannt sein um den die Werkzeugorientierung gedreht werden soll. Außerdem müssen die Start- und Endorientierung vorgegeben werden. Dabei ist die Startorientierung immer durch den vorhergehenden Satz gegeben, die Endorientierung muss entweder programmiert werden oder durch andere Bedingungen festgelegt werden.

Die Großkreisinterpolation zusammen mit der Programmierung von Winkelpolynomen entspricht einer Linear- und Polynominterpolation von Konturen. Die erweiterte Interpolation von Orientierungen auf einer Kegelfläche dagegen entspricht einer Interpolation von Kreisen in einer Ebene. Demzufolge gibt es, analog zur Programmierung von Kreisen, auch verschiedene Möglichkeiten der Programmierung. Diese entsprechen den Programmiermöglichkeiten von Kreisen wie G2/G3 (Mittelpunkts- oder Radiusangabe), CIP (Kreis über Zwischenpunkt) und CT (Tangentialkreis).

Die Drehachse des Kegels wird als (normierter) Vektor mit A6, B6, C6 programmiert. Der Öffnungswinkel des Kegels wird mit dem Bezeichner NUT (nutation angle) in Grad programmiert. Der Wert dieses Winkels ist auf das Intervall 0 < NUT < 180 Grad beschränkt. Die Drehachse des Kegels und der Öffnungswinkel können nicht gleichzeitig vorgegeben werden.

Wird ein Winkel ausserhalb des gültigen Intervalls programmiert, erscheint ein Alarm. Für den Spezialfall NUT=90 Grad wird der Orientierungsvektor in einer Ebene senkrecht zum Richtungsvektor interpoliert (Großkreisinterpolation). Mit dem Vorzeichen des programmierten Öffnungswinkel wird festgelegt, ob der Verfahrwinkel größer oder kleiner als 180 Grad sein soll.

Zusätzlich können auch noch Polynome für die beiden Winkel PHI und PSI programmiert. Dabei ist PHI der Drehwinkel der Orientierung um die Richtungsachse des Kegels und PSI der Öffnungswinkel des Kegels.

Die Programmierung dieser Polynome erfolgt in der weiter oben beschriebenen Weise mit:

```
PO[PHI] = (a2, a3, a4, a5) PO[PSI] = (b2, b3, b4, b5)
```

Das heißt es können Polynome maximal 5. Grades programmiert werden. Dabei werden die konstanten und linearen Koeffizienten jeweils durch die Start- bzw. Endorientierung bestimmt.

Die Programmierung des Öffnungswinkel des Kegels erfolgt z.B. mit dem Bezeichner NUT=.... Dies ist möglich, falls entweder der G-Code ORICONCW oder ORICONCCW aktiv ist. Hierbei ist die Angabe einer Endorientierung zwingend erforderlich. Ein vollständiger Kegelmantel mit 360 Grad kann auf diese Weise nicht interpoliert werden. Mit dem Vorzeichen des Öffnungswinkels wird festgelegt, ob der Verfahrwinkel größer oder kleiner als 180 Grad sein soll. Dabei bedeuten:

```
NUT=+... Verfahrwinkel kleiner oder gleich 180 Grad


NUT=-... Verfahrwinkel größer oder gleich 180 Grad
```

Ein positives Vorzeichen kann bei der Programmierung weggelassen werden.

Die Programmierung einer Zwischenorientierung erfolgt mit den Bezeichern A7,B7, C7. Dies ist möglich, falls der G-Code ORICONIO aktiv ist. Die zusätzliche Programmierung der Endorientierung ist hierbei zwingend erforderlich. Die Orientierungsänderung wird eindeutig durch die 3 Vektoren, Start-, End- und Zwischenorientierung festgelegt. Alle drei Vektoren müssen hierbei voneinander unterschiedlich sein. Die Drehrichtung wird durch die drei Vektoren Start-, End- und Zwischenorientierung festgelegt. Falls die programmierte Zwischenorientierung parallel zur Start- oder Endorientierung ist, wird eine lineare Großkreisinterpolation der Orientierung in der Ebene, die von Start- und Endvektor aufgespannt wird, durchgeführt.

Die Auswahl der Interpolationsart erfolgt z.B. mit modalen G-Codes der G-Code Gruppe 51. In einer solchen Gruppe sind normalerweise nur die beiden G-Codes ORIAXES, ORIVECT und ORIPATH enthalten. Bei ORIAXES wird die programmierte Endorientierung durch lineare Interpolation Orientierungsachsen angefahren. Mit ORIVECT wird direkt der Orientierungsvektor interpoliert, die resultierenden Bewegungen der Orientierungsachsen bestimmen sich aus der speziellen Kinematik der Maschine. Bei aktivem ORIPATH kann die Orientierungsänderung relativ zur Flächennormalen mittels mit LEAD und TILT programmierbaren Winkeln festgelegt.

Zur Implementierung einer solchen erweiterten Interpolation von Orientierungen auf einer Kegelmantelfläche gemäß der vorliegenden Erfindung sind keine Erweiterungen in der voranstehend beschriebenen Funktion Ocurve direkt notwendig. Mit einer bestehenden Implementierung der Orientierungsinterpolation kann ebenso eine Interpolation auf einer Kegelmantelfläche durchgeführt werden, falls die Basisvektoren und die Winkel in der Ocurve geeignet gesetzt werden. Das heißt, es müssen für die Kegelmantel-Interpolation lediglich neue Konstruktoren in der Ocurve eingeführt werden.

Die mathematischen Grundlagen für eine erfindungsgemäße Kegelinterpolation von Orientierungen sind im Folgenden dargestellt:

Ein Orientierungsvektor, der auf einer Kegelfläche mit dem normierten Richtungsvektor $\mathbf{d}$ interpoliert wird, lässt sich in allgemeiner Form darstellen als:

$$\mathbf{o} = \cos\psi\,\mathbf{d} + \sin\psi\,(\cos\phi\,\mathbf{p} + \sin\phi\,\mathbf{p}_n)$$

mit den orthonormierten Basisvektoren

$$\mathbf{p} = \frac{\mathbf{s} - (\mathbf{s}\cdot\mathbf{d})\mathbf{d}}{\sqrt{1 - (\mathbf{s}\cdot\mathbf{d})^2}}$$

$$\mathbf{p}_n = \mathbf{d}\times\mathbf{p}\,,$$

wobei $\mathbf{s}$ der normierte Startvektor und die Winkel $\phi$ und $\psi$ als Polynome des Interpolationsparameters $u$ darstellbar sind. Als Randbedingungen für diese Winkelfunktionen erhält man folgende Gleichungen:

$$\phi(u = 0) = 0, \quad \phi(u = 1) = \phi_e = \operatorname{atan}\left(\frac{\mathbf{e}\cdot\mathbf{p}_n}{\mathbf{e}\cdot\mathbf{p}}\right)$$

$$\psi(u = 0) = \psi_0 = \operatorname{acos}(\mathbf{s}\cdot\mathbf{d})\,,$$

wobei $\mathbf{e}$ der normierte Endvektor der Orientierung ist. Im einfachsten Fall ist $\phi(u) = \phi_e u$ und $\psi(u) = \psi_0 = \mathit{const}$. Damit erhält man eine Interpolation des Orientierungsvektors auf einer Kegelfläche.

Es ist jedoch z.B. auch möglich eine spiralförmige" Orientierungsänderung bei der sich der Öffnungswinkel des Kegels linear ändert zu beschreiben. Dazu setzt man

$$\psi(u) = \psi_0 + (\psi_1 - \psi_0)u$$

$$\mathbf{e}\cdot\mathbf{d} = \cos\psi_1$$

wobei $\mathbf{e}$ der normierte Endvektor ist.

Ob der interpolierte Orientierungsvektor sich um den Richtungsvektor des Kegels $\mathbf{d}$ links oder rechts herum dreht wird durch den Normalenvektor $\mathbf{p}_n$ festgelegt.

Für den Öffnungswinkel ψ des Kegels als auch für den Drehwinkel φ können zusätzlich Polynome programmiert werden, sodass z.B. auch Orientierungsänderungen möglich sind, bei denen die Orientierung um einen Kegelmantel oszilliert.

Für die allgemeine Form der Kegelinterpolation müssen deren Basisvektoren festgelegt werden. Dabei ist der Startvektor immer durch die Endorientierung des vorhergehenden Bewegungsabschnitts festgelegt. Die Endorientierung muss in jedem Bewegungsabschnitt programmiert werden. Zur Festlegung des Kegels (Richtungsvektor **d**) sind jedoch noch weitere Angaben notwendig. Es gibt dabei verschiedene Möglichkeiten:

1. Programmierung des Richtungsvektor.
2. Programmierung des Öffnungswinkels des Kegels
3. Programmierung einer Zwischenorientierung
4. Tangentiale Fortsetzung der Orientierung vom vorhergehenden Bewegungsabschnitt. In diesem Fall wird also die 1. Ableitung des Orientierungsvektors am Anfang vorgegeben.

Während im 1. Fall der Richtungsvektor direkt vorgegeben wird, muss dieser in allen anderen Fällen zuerst berechnet werden. Dies ist jedoch in allen Fällen in eindeutiger Weise möglich.

**Patentansprüche**

1.  Steuerungsverfahren zur Bewegungsführung eines bewegbaren Maschinenelementes einer numerisch gesteuerten industriellen Bearbeitungsmaschine wie einer Werkzeugmaschine, einem Robotern oder dergleichen, wobei

    - das Maschinenelement im Arbeitsraum mittels Orientierungsvektoren im Raum orientierbar ist und
    - eine Bewegungsbahn des Maschinenelementes sowie dessen Orientierung in unmittelbar aufeinanderfolgende Bewegungsabschnitte aufgelöst ist, **dadurch gekennzeichnet, dass**
    - eine Änderung der Orientierung innerhalb eines Bewegungsabschnitts durch Schwenken eines Orientierungsvektors von einem Startvektor zu einem Endvektor um einen ersten Winkel (PHI) in der von Startvektor und Endvektor aufgespannten Ebene und um einen zweiten Winkel (PSI) senkrecht zu dieser Ebene erfolgt, wobei
    - beide Winkel (PHI, PSI) von Orientierungsvektoren über mehrere Bewegungsabschnitte interpoliert werden.

2.  Steuerungsverfahren zur Bewegungsführung eines bewegbaren Maschinenelementes nach Anspruch 1, wobei eine Interpolation der Winkel (PHI, PSI) von Orientierungsvektoren über mehrere Bewegungsabschnitte durch eine Polynominterpolation erfolgt.

3.  Steuerungsverfahren zur Bewegungsführung eines bewegbaren Maschinenelementes nach Anspruch 1, wobei eine Interpolation der Winkel (PHI, PSI) von Orientierungsvektoren über mehrere Bewegungsabschnitte durch eine Splineinterpolation erfolgt.

4.  Steuerungsverfahren zur Bewegungsführung eines bewegbaren Maschinenelementes nach Anspruch 1, wobei Orientierungsvektoren über mehrere Bewegungsabschnitte auf einer Kegelmantelfläche interpoliert werden.

5.  Steuerungsverfahren zur Bewegungsführung eines bewegbaren Maschinenelementes nach Anspruch 4, wobei als erster Winkel (PHI) jeweils der Drehwinkel der Orientierung um die Richtungsachse des Kegels und als zweiter Winkel (PSI) jeweils der Öffnungswinkel des Kegels vorgegeben wird.

6.  Steuerungsverfahren zur Bewegungsführung eines bewegbaren Maschinenelementes nach einem der vorangehenden Ansprüche, wobei die Koeffizienten von Polynomen oder Splines zur Interpolation einer Orientierung des Maschinenelementes so gewählt werden, dass eine geschwindigkeitsstetige und/oder beschleunigungsstetige Bewegung der Orientierungsachsen des Maschinenelementes erfolgt.

7.  Vorrichtung zur Durchführung des Verfahrens nach einem der vorangehenden Ansprüche, insbesondere geeignet programmierte numerische Steuerung.

**Claims**

1. Control method for guiding the motion of a movable machine element of a numerically controlled industrial processing machine such as a machine tool, a robot or the like, wherein:

   - the machine element can be orientated in the working space using orientation vectors in space, and
   - a motion path of the machine element and its orientation are subdivided into immediately succeeding motion segments,

   **characterised in that**

   - a change in orientation within a motion segment is effected by tilting an orientation vector from a start vector to an end vector through a first angle (PHI) in the plane spanned by the start vector and end vector and through a second angle (PSI) perpendicular to said plane, with
   - both angles (PHI, PSI) of orientation vectors being interpolated over a plurality of motion segments.

2. Control method for guiding the motion of a movable machine element according to claim 1, wherein an interpolation of the angles (PHI, PSI) of orientation vectors over a plurality of motion segments is accomplished by means of a polynomial interpolation.

3. Control method for guiding the motion of a movable machine element according to claim 1, wherein an interpolation of the angles (PHI, PSI) of orientation vectors over a plurality of motion segments is accomplished by means of a spline interpolation.

4. Control method for guiding the motion of a movable machine element according to claim 1, wherein orientation vectors are interpolated on a surface of a cone over a plurality of motion segments.

5. Control method for guiding the motion of a movable machine element according to claim 4, wherein the rotation angle of the orientation about the direction axis of the cone is specified in each case as the first angle (PHI) and the apex angle of the cone is specified in each case as the second angle (PSI).

6. Control method for guiding the motion of a movable machine element according to one of the preceding claims, wherein the coefficients of polynomials or splines for interpolation of an orientation of the machine element are selected such that a motion of the orientation axes of the machine element is performed with a continuous velocity and/or continuous acceleration.

7. Device for performing the method according to one of the preceding claims, in particular a suitably programmed numerical controller.

**Revendications**

1. Procédé de commande permettant de guider le déplacement d'un élément mobile d'une machine d'usinage industrielle à commande numérique telle qu'une machine-outil, un robot ou analogue, procédé dans lequel

   - l'élément de machine est orientable dans l'espace de travail au moyen de vecteurs d'orientation dans l'espace et
   - une trajectoire et l'orientation de l'élément de machine sont décomposées en portions de mouvement se succédant immédiatement, **caractérisé en ce que**
   - une variation de l'orientation à l'intérieur d'une portion de déplacement est effectuée en faisant pivoter un vecteur d'orientation, depuis un vecteur de départ jusqu'à un vecteur d'arrivée, d'un premier angle (PHI) dans le plan passant par le vecteur de départ et le vecteur d'arrivée et d'un deuxième angle (PSI) perpendiculaire à ce plan,
   - les deux angles (PHI, PSI) de vecteurs d'orientation étant interpolés sur plusieurs portions de déplacement.

2. Procédé de commande permettant de guider le déplacement d'un élément de machine mobile selon la revendication 1, dans lequel une interpolation des angles (PHI, PSI) de vecteurs d'orientation sur plusieurs portions de déplacement est effectuée par interpolation polynomiale.

**3.** Procédé de commande permettant de guider le déplacement d'un élément de machine mobile selon la revendication 1, dans lequel une interpolation des angles de vecteurs d'orientation sur plusieurs portions de déplacement est effectuée par interpolation par spline.

**4.** Procédé de commande permettant de guider le déplacement d'un élément de machine mobile selon la revendication 1, dans lequel des vecteurs d'orientation sur plusieurs portions de déplacement sont interpolés sur une surface d'enveloppe conique.

**5.** Procédé de commande permettant de guider le déplacement d'un élément de machine mobile selon la revendication 4, dans lequel l'angle de rotation de l'orientation autour de l'axe directionnel du cône est prédéfini comme premier angle (PHI) et l'angle d'ouverture du cône est prédéfini comme deuxième angle (PSI).

**6.** Procédé de commande permettant de guider le déplacement d'un élément de machine mobile selon l'une des revendications précédentes, dans lequel les coefficients des polynômes ou des splines permettant l'interpolation d'une orientation de l'élément de machine sont choisis de façon à effectuer un mouvement à vitesse constante et/ou à accélération constante des axes d'orientation de l'élément de machine.

**7.** Dispositif destiné à mettre en oeuvre le procédé selon l'une des revendications précédentes, notamment une commande numérique programmée de façon appropriée.

## FIG 1

PHI

## FIG 2

PHI

PSI

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0268491 A